# EUROPEAN PATENT SPECIFICATION

(11) **EP 2 141 195 B1**
(45) Date of publication and mention of the grant of the patent: **27.03.2013**
(21) Application number: 09162481.7
(22) Date of filing: 11.06.2009
(51) Int. Cl.: C08K 9/04, C09C 1/30

(54) **Method for preparing fragrant powder composition for tire**
Verfahren zur Herstellung einer Duftstoffpulverzusammensetzung für einen Reifen
Procédé pour préparer des compositions de poudre odorante pour pneu

(30) Priority: 30.06.2008 KR 20080062760
(43) Date of publication of application: 06.01.2010
(73) Proprietor: Kumho Tire Co., Inc., Gwangsan-gu Gwangju 506-711 (KR)
(72) Inventor: Cho, Sun Ny, 502-156, GWANGJU (KR); Park, Je Hwan, 502-762, GWANGJU (KR)
(74) Representative: Bongiovanni, Simone

(56) References cited:
- EP-A- 0 536 942
- EP-A- 0 820 762
- EP-A- 1 754 748
- US-A- 5 876 755
- DATABASE WPI Week 200455 Thomson Scientific, London, GB; AN 2004-564330 XP002544047 -& JP 2004 203954 A (SUMITOMO RUBBER IND LTD) 22 July 2004 (2004-07-22)
- DATABASE CA [Online] CHEMICAL ABSTRACTS SERVICE, COLUMBUS, OHIO, US; Entered STN 1 August 2005 (2005-08-01), LEE, INN ET AL: "Fragrant tire" XP002544085 retrieved from STN Database accession no. 2005:677188 & KR 168 608 B1 (KUMHO INDUSTRIAL CO., LTD., S. KOREA) 15 January 1999 (1999-01-15)

## Description

### 1. Field of the Invention

The present invention relates to a method for preparing a fragrant powder composition for a tire, a rubber composition for a tire, which includes the prepared fragrant powder composition for a tire, a rubber containing the prepared fragrant powder composition for a tire, and a tire including the rubber which contains the prepared fragrant powder composition for a tire.

### 2. Description of the Related Art

While driving a vehicle, a burning smell is caused by a brake lining and/or heat generated during rapid starting or braking.

Especially, aggressive driving such as a sudden start, acceleration and/or brake strongly generates such smell and causes a reduction in lifespan of a tire for the vehicle.

Such sudden start, acceleration and/or brake must be inhibited, besides, a great deal of studies for development of a fragrant tire to prevent bad odor of the tire are presently performed.

For instance, a fragrance containing rubber composition prepared by adding a liquid fragrance to a rubber mixture is known. However, this liquid fragrance is difficult to handle or manage and has a problem of great loss in fragrant ingredients caused by volatilization thereof. In order to solve such problems, a technology for application of a fragrance containing carrier to a tire was proposed. In case where a content of the fragrance in the carrier is increased, a propeller type mixer used to combine the fragrance with the carrier is not smoothly operated and generates heat during mixing, causing loss of the fragrance.

The concentrated fragrance also exhibits poor dispersion properties to reduce production efficiency of the fragrance containing carrier and, accordingly, when the fragrance is used in tire manufacturing, it tends to further cause additional loss of the fragrance.

Rubber compositions containing frangrance for tire compositions are known from JP-A-2004 203954, FR-K1-168608, and EP-A-1754748.

Therefore, the present invention relates to a method for preparing a fragrant powder composition for a tire with an advantage in that loss of fragrant ingredients is favorably reduced during production thereof, as well as a rubber composition for a tire, which includes the fragrant powder composition for a tire prepared by the above method, a rubber containing the prepared fragrant powder composition for a tire, and a tire including the rubber which contains the prepared fragrant powder composition for a tire.

It is reported that general fragrances may contain a variety of harmful components including, for example, acetone used as a detergent or a bleach, benzyl alcohol, methylbenzene used in a coolant for a vehicle, DEP, phthalate, etc., thus causing significant problems for skin, respiratory system and/or nervous system. Accordingly, the present invention is directed to a method for preparing a fragrant powder composition for a tire by using a specific fragrance without such harmful components described above.

### SUMMARY OF THE INVENTION

Accordingly, it is an object of the present invention to provide a method for preparing a fragrant powder composition for a tire. The present invention also provides a rubber composition for a tire, which includes the fragrant powder composition for a tire prepared by the above method, a rubber containing the prepared fragrant powder composition for a tire, and a tire including the rubber which contains the prepared fragrant powder composition for a tire.

More particularly, the present invention provides: a method for preparing a fragrant powder composition for a tire wherein porous silica is introduced into a mixer and a liquid fragrance as well as a solvent are added to the porous silica by spray injection while rotating the mixer; a rubber composition for a tire, which includes the fragrant powder composition for a tire prepared by the above method; a rubber containing the prepared fragrant powder composition for a tire; and a tire including the rubber which contains the prepared fragrant powder composition for a tire.

The fragrant powder composition of the present invention prepared using less harmful fragrant ingredients may reduce harmfulness to a human body. Application of the inventive fragrant powder composition to production of tires may considerably reduce loss of the fragrance, thereby achieving economical effects. Moreover, when a tire containing the fragrant powder of the present invention is mounted on a vehicle, the tire may exhibit excellent long lasting fragrance properties.

### DETAILED DESCRIPTION OF THE INVENTION

According to the present invention, there are provided a method for preparing a fragrant powder composition for a tire, a rubber composition for a tire, which includes the fragrant powder composition for a tire prepared by the above method, a rubber containing the prepared fragrant powder composition for a tire, and a tire including the rubber which contains the prepared fragrant powder composition for a tire.

Firstly, the present invention provides a method for preparing a fragrant powder composition for a tire.

The method for preparing a fragrant powder composition for a tire according to the present invention is performed by introducing porous silica into a mixer and adding a liquid fragrance as well as a solvent to the porous silica by spray injection while rotating the mixer.

The porous silica has a BET surface area ranging from 100 to 200m²/g.

The liquid fragrance according to claim 1 may comprise at least one selected from fragrant substances permitted by Flavor and Extract Manufacturers Association (FEMA; FEMA permitted substances are useable as food additives) and/or International Fragrance Manufacturers Association (IFRA; IRFA permitted substances are available for manufacturing cosmetics).

Examples of the liquid fragrance permitted by FEMA and/or IFRA for use in the invention include at least one selected from a group consisting of linalyl acetate, hedion, citronellol, isobornyl acetate, cis-3-hexenyl acetate, D-limonene, isoamyl acetate, ethyl-2-methyl butyrate, ethyl isobutyrate, Eucalyptus oil, camphor crystal, allyl amyl glycolate, lilial, tricyclodecenyl acetate (TCDA), 2,4-dimethyl-3-cyclohexene-1-carboxaldehyde (CYCRAL), dipentene extra, and nerolin yara yara.

Such liquid fragrance may be added in an amount of 50 to 200 parts by weight ("wt. parts"), preferably 100 to 200 wt. Parts, relative to 100 wt. parts of porous silica.

When an amount of the liquid fragrance is less than 50 wt. parts relative to 100 wt. parts of porous silica, the fragrant powder composition for a tire may have only slight effect on the tire. On the other hand, if the amount of the liquid fragrance exceeds 200 wt. parts, the effect of the fragrant powder composition for a tire is not further increased. In this regard, the solvent may be a substance capable of improving heat resistance of the liquid fragrance.

However, in consideration of safety, a glycol solvent with less harmfulness is preferred. The preferred solvent may be exemplified by dipropylene glycol.

An amount of the solvent used in the present invention may range from 10 to 50 wt. parts relative to 100 wt. parts of porous silica.

When the amount of the solvent is less than 10 wt. parts relative to 100 wt. parts of porous silica, the solvent may have only slight effect on improvement in heat resistance of the liquid fragrance. On the other hand, if the amount of the solvent exceeds 50 wt. parts, the effect of the solvent on improvement in heat resistance of the liquid fragrance is not further increased.

Briefly, the method for preparing a fragrant powder composition for a tire according to the present invention may comprise introducing porous silica into a mixer and adding a liquid fragrance as well as a solvent to the porous silica through spray injection while rotating the mixer at 10 to 100 rpm.

The present invention also provides a rubber composition for a tire, which includes the fragrant powder composition for a tire prepared by the method described above.

The rubber composition for a tire according to the present invention may include 0.1 to 20 wt. parts of the fragrant powder composition, which was prepared by the method described above, relative to 100 wt. parts of a raw rubber.

The raw rubber used for the rubber composition for a tire according to the present invention may comprise at least one selected from a group consisting of natural rubber, synthetic rubber.

The raw rubber used in the present invention may be a mixture of natural rubber and synthetic rubber in a weight ratio of 1:9 to 9:1.

The raw rubber used in the present invention may be a mixture of two different synthetic rubbers in a weight ratio of 1:9 to 9:1.

Alternatively, the raw rubber used in the present invention may be a mixture of three different synthetic rubbers in a desired relative weight ratio.

The rubber used in the present invention may be a mixture of three different synthetic rubbers in an equal weight ratio.

The natural rubber used herein may include any typical natural rubber.

The natural rubber used herein may include any natural rubber having a group substituted by at least one polar group selected from a group consisting of epoxy, carboxyl, carbonyl and hydroxyl.

The synthetic rubber used herein may include at least one selected from a group consisting of butyl rubber, modified butyl rubber, halogenated butyl rubber, chlorosulfonic polyethylene rubber, epichlorohydrin rubber, fluoro rubber, silicon rubber, butadiene rubber (BR), nitrile rubber, hydrogenated nitrile rubber, nitrile butadiene rubber (NBR), modified nitrile butadiene rubber, styrene-butadiene-rubber (SBR), modified styrene butadiene rubber, chlorinated polyethylene rubber, styrene-ethylenebutylene-styrene-rubber (SEBS), ethylene-propylene rubber, ethylenepropylenediene(EPDM) rubber, hypalon rubber, chloroprene rubber, ethylene vinyl acetate rubber, acryl rubber, hydrin rubber, vinylbenzyl chloride styrene-butadiene rubber, bromomethyl styrene butyl rubber, maleic acid styrene-butadiene rubber, carboxylic acid styrene-butadiene rubber, epoxyisoprene rubber, maleic acid ethylene-propylene rubber, and carboxylic acid nitrile butadiene rubber.

Examples of the halogenated rubber may include chlorobutyl rubber and/or bromobutyl rubber.

The rubber composition for a tire, which includes the fragrant powder composition for a tire according to the present invention, may further include 40 to 80 wt. parts of filler relative to 100 wt. parts of the raw rubber, in order to enhance reinforcing properties of the rubber composition.

The filler may include, for example, at least one selected from a group consisting of carbon black, syndiotactic-1,2-polybutadiene (SPB), silica, titanium dioxide, clay, layered silicate, tungsten, talc, mica, calcium carbonate, vermiculite and hydrotalcite.

Syndiotatic-1,2-polybutadiene (SPB) may have a diameter ranging from 0.01 to 0.1 µm and a specific surface area ranging from 80 to 90m²/g.

Syndiotatic-1,2-polybutadiene (SPB) preferably has a diameter ranging from 1 to 10 µm and a specific surface area ranging from 100 to 120m²/g.

At least one selected from a group consisting of mica, calcium carbonate, talc, vermiculite and hydrotalcite among the foregoing filler may have a particle size of 0.1 to 20 µm.

At least one selected from a group consisting of mica, calcium carbonate, talc, vermiculite and hydrotalcite among the foregoing filler may have a space between layers ranging from 0.1 to 10nm.

At least one selected from a group consisting of mica, calcium carbonate, talc, vermiculite and hydrotalcite among the foregoing filler may have an aspect ratio (l/d) of not less than 5, which is a ratio of planar width (1) to thickness (d).

At least one selected from a group consisting of mica, calcium carbonate, talc, vermiculite and hydrotalcite among the foregoing filler may have an aspect ratio (l/d) of 5 to 100.

At least one selected from a group consisting of mica, calcium carbonate, talc, vermiculite and hydrotalcite among the foregoing filler may have a particle size of 0.1 to 20 µm, a space between layers of 0.1 to 10nm and an aspect ratio of 5 to 100.

The rubber composition for a tire, which includes the fragrant powder composition for a tire according to the present invention, may optionally include at least one additive selected from a group consisting of reinforcing fillers, anti-ageing agents, activated agents, processing oil, vulcanizing agents and vulcanization accelerators used in a rubber composition for conventional tires except the raw rubber, the fragrant powder composition for a tire described above in a desired amount, if needed. However, these materials described above are well-known substances used for a rubber composition for conventional tires and do not constitute essential configurations of the present invention, and therefore, a further detailed description thereof will be omitted hereinafter.

The present invention also provides a rubber containing the fragrant powder composition prepared by the above method according to the present invention.

More particularly, the present invention provides a rubber for a tire, which contains the fragrant powder composition for a tire prepared by the above method according to the present invention.

Furthermore, the present invention provides a tire including the rubber which contains the fragrant powder composition for a tire prepared by the above method according to the present invention.

The inventive tire may include the rubber containing the fragrant powder composition for a tire prepared by the above method according to the present invention, wherein the rubber is a tread rubber.

The inventive tire may include the rubber containing the fragrant powder composition for a tire prepared by the above method according to the present invention, wherein the rubber is a sidewall rubber.

The tire disclosed herein may include at least one selected from a group consisting of an automobile tire, a truck tire, a bus tire, an aircraft tire and a motorbike tire.

Hereinafter, preferred embodiments of the present invention will be described in detail in the following examples which are given for illustrative purposes only and should not be construed as limiting the spirit and scope of the invention.

### EXAMPLE 1-1

### Preparation of fragrant powder composition for a tire

100 wt. parts of porous silica Z1165MP (MP: micropore type, available from Rhodia Ltd.) having a BET surface area of 160m²/g was placed in an inclined rotary type pill coating mixer (manufactured by Bosung Co., a size of 1,060mm). While rotating the mixer at 50 rpm, 150 wt. parts of liquid fragrance and 30 wt. parts of solvent were added to the porous silica by spray injection to prepare a fragrant powder composition for a tire.

The liquid fragrance was linalyl acetate and the solvent was dipropylene glycol.

### EXAMPLE 1-2 to EXAMPLE 1-29

### Preparation of fragrant powder composition for a tire

The same procedure described in Example 1-1 was repeated to prepare a fragrant powder composition for a tire, except that the liquid fragrance was different as shown in the following liquid fragrance list of Table 1.

**TABLE 1**

| Liquid fragrance list | | | |
|---|---|---|---|
| Example | Liquid fragrance | Example | Liquid fragrance |
| 1-2 | Linalool | 1-3 | Geraniol* |
| 1-4 | Hedion | 1-5 | Beta ionone* |
| 1-6 | Phenylethyl alcohol* | 1-7 | Citronellol |
| 1-8 | Benzyl acetate* | 1-9 | Terpineol |
| 1-10 | Isobornyl acetate | 1-11 | Tetrahydrolinalool |
| 1-12 | Cis-3-hexenyl acetate | 1-13 | D-limonene |
| 1-14 | Isoamyl acetate | 1-15 | Ethyl-2-methyl butyrate |
| 1-16 | Ethyl isobutyrate | 1-17 | Eucalyptus oil |
| 1-18 | Camphor crystal | 1-19 | Dihydromyrcenol* |
| 1-20 | Allyl amyl glycolate | 1-21 | Coumarin* |
| 1-22 | Galaxolide | 1-23 | Lilial |
| 1-24 | Tricycle decenyl acetate | 1-25 | 4-tert-butylcyclohexyl acetate |
| 1-26 | 2,4-dimethyl-3-cyclohexene-1-carboxaldehyde | 1-27 | Isononyl acetate* |
| 1-28 | Dipentene extra | 1-29 | Nerolin yara yara |

| | | | |
|---|---|---|---|
| *Not fragrances according to the invention. | | | |

### COMPARATIVE EXAMPLE 1

100 wt. parts of silica Z115GR (GR: granule type, available from Rhodia Ltd.) having a BET surface area of 115m²/g was placed in a propeller mixing type mixer. While rotating the mixer, 150 wt. parts of liquid fragrance and 30 wt. parts of solvent were poured and mixed with the porous silica to prepare a fragrant powder composition for a tire.

The liquid fragrance was linalyl acetate and the solvent was dioctyl phthalate as a phthalate based solvent.

### EXAMPLE 2

10 wt. parts of the fragrant powder composition for a tire prepared in Example 1-1 as well as other ingredients including 70 wt. parts of carbon black, 2 wt. parts of N-phenyl-N'-(1,3-dimethylbutyl)-P-phenylenediamine (6PPD) as an anti-ageing agent, 2 wt. parts of zinc oxide and 2 wt. parts of stearic acid were introduced to 100 wt. parts of a raw rubber comprising 50 wt. parts of natural rubber (NR) and 50 wt. parts of styrene-butadiene rubber (SBR) in a Banbury mixer, followed by uniformly admixing to prepare a rubber mixture.

After as a vulcanizing agent, 2.0 wt. parts of sulfur and, as a vulcanization accelerator, 2.0 wt. parts of cyclohexyl benzothiazol sulfonamide (CZ) were added to the rubber mixture, the obtained mixture was subjected to vulcanization at 160°C for 20 minutes so as to produce a rubber specimen.

The used carbon black has an iodine adsorption value of 115mg/g and a DBP adsorption value of 135cc/100g.

The following Table 2 shows contents of constitutional components in the rubber composition.

### COMPARATIVE EXAMPLE 2

The same procedure described in Example 2 was repeated to produce a rubber specimen, except that 10 wt. parts of the fragrant powder composition for a tire prepared in Comparative Example 1 was used.

### CONTROL CASE

The same procedure described in Example 2 was repeated to produce a rubber specimen, except that a fragrant powder composition for a tire was not used while 15 wt. parts of linalyl acetate as a fragrance was added to 100 wt. parts of the raw rubber.

**TABLE 2**

| Constitutional components of rubber compositions in Example 2, Comparative Example 2 and Control Case (unit: wt. parts) | | | |
|---|---|---|---|
| Items | Control Case | Comparative Example 2 | Example 2 |
| NR | 50 | 50 | 50 |
| SBR | 50 | 50 | 50 |
| Fragrant powder | - | 10 | 10 |
| Fragrance | 15 | - | - |
| Carbon black | 70 | 70 | 70 |
| 6 PPD | 2 | 2 | 2 |
| Zinc oxide | 2 | 2 | 2 |
| Stearic acid | 2 | 2 | 2 |
| Sulfur | 2.0 | 2.0 | 2.0 |
| Vulcanization accelerator (CZ) | 2.0 | 2.0 | 2.0 |

### EXPERIMENTAL EXAMPLE 1

For each of the rubber specimens produced by Control Case, Comparative Example 2 and Example 2, an amount of a fragrance residue in the specimen after production thereof and an amount of a fragrance residue in the specimen after thermal ageing are measured and the results are shown in the following Table 3.

**TABLE 3**

| Content of fragrance residue in rubber specimen | | | |
|---|---|---|---|
| Section | Control Case | Comparative Example 2 | Example 2 |
| Type of fragrance | Liquid fragrance | Type A carrier* | Type B carrier ** |
| Net amount of fragrance to be introduced (except amount of carrier) | 15 | 15 | 15 |
| Amount of fragrance residue in rubber specimen after production thereof (relative ratio) | 100 | 132 | 157 |
| Amount of fragrance residue in rubber specimen after thermal ageing*** (relative ratio) | 100 | 350 | 525 |

| | | | |
|---|---|---|---|
| * Type A carrier: silica Z115GR ** Type B carrier: silica Z1165MP *** Thermal ageing: leaving in an oven at 50°C for 336 hours | | | |

Table 3 indicates that the fragrant powder for a tire prepared according to Example 2 which illustrates only an improvement in mixing procedure, as compared with the procedure described in Comparative Example 2, can exhibit loss of a fragrant portion reduced from 4% to 0%. When such prepared fragrant powder was added to a rubber composition to produce a rubber product, it was determined that an amount of a fragrance residue in the rubber product is increased by 20 % while a long lasting period of the fragrance is increased by 50%. Compared to the control case which illustrates introduction of a liquid fragrance to produce a rubber for a tire, the inventive method shows 57% improvement in amount of the fragrance residue in the rubber product and, in addition, an increase in long lasting period of at least 5 times.

### EXPERIMENTAL EXAMPLE 2

Harmfulness of a solvent used in preparation of a fragrant powder composition for a tire was investigated by comparisons between dipropylene glycol used in Example 1, dioctyl phthalate as a phthalate based solvent used in Comparative Example 1, and ethyl alcohol as one of general solvents used in the control case. The results are shown in the following Table 4.

**TABLE 4**

| Determination of harmfulness of solvents | | | |
|---|---|---|---|
| Solvent | H (health) | F (fire) | R (reactivity) |
| Dioctyl phthalate | 1 | 1 | 0 |
| Ethyl alcohol | 0 | 3 | 0 |
| Dipropylene glycol | 0 | 1 | 0 |

| | | | |
|---|---|---|---|
| * In Table 4, items such as H (health), F (fire), R (reactivity) are criteria for determination of harmfulness grades defined by national fire protection association (NFPA) and the harmfulness is higher with an increase in numerical number. | | | |

As shown in Table 4, the method for preparing a fragrant powder composition for a tire according to the present invention uses a solvent such as dipropylene glycol with reduced harmfulness rather than dioctyl phthalate as a phthalate based solvent used in production of a conventional fragrant powder composition for a tire so that the fragrant powder composition of the present invention exhibits reduced harmfulness, thereby solving a problem of causing damage to health of a worker at a tire manufacturing plant and/or a tire user.

As is apparent from the above disclosure, the present invention provides a fragrant powder composition for a tire, containing a fragrance with reduced harmfulness, so that the fragrant powder composition may solve a problem of causing damage to health of a user and reduce loss in fragrance occurred during production of tires which in turn has economical benefits. When a rubber composition containing the fragrant powder composition is used to produce a tire rubber and to manufacture a tire including the tire rubber, the tire may have excellent long lasting fragrance properties even after the tire is mounted on a vehicle.

## Claims

1. A method for preparing a fragrant powder composition for a tire, comprising: placing porous silica in a mixer;
and adding a liquid fragrance and a solvent to the porous silica through spray injection while rotating the mixer,
wherein the liquid fragrance includes at least one selected from a group consisting of D-limonene, isoamyl acetate, ethyl-2-methyl butyrate, ethyl isobutyrate, Eucalyptus oil, camphor crystal, dipentene extra, linalyl acetate, hedion, citronellol, isobornyl acetate, cis-3-hexenyl acetate, allyla myl glycolate, lilial, tricyclodecenyl acetate, 2,4-dimethyl-3-cyclohexene-1-carboxaldehyde, and nerolin yara yara and the porous silica has a BET surface area ranging from 100 to 200m2/g.

2. The method according to claim 1, wherein the liquid fragrance is in an amount of 50 to 200 parts by weight relative to 100 parts by weight of porous silica.

3. The method according to claim 1, wherein the solvent is dipropylene glycol, wherein said solvent is added in an amount of 10 to 50 parts by weight relative to 100 parts by weight of porous silica.

4. A rubber composition for a tire, including 0.1 to 20 parts by weight of the fragrant powder composition for a tire prepared by the method as set forth in claim 1 relative to 100 parts by weight of a raw rubber.

5. A rubber including the fragrant powder composition for a tire prepared by the method as set forth in claim 1.

6. A tire containing the rubber which includes the fragrant powder composition for a tire prepared by the method as set forth in claim 1.

## Patentansprüche

1. Verfahren zum Herstellen einer Duftstoffpulverzusammensetzung für einen Reifen, welches Folgendes aufweist:
Anordnen von porösem Siliziumdioxid in einem Mischapparat; und
Hinzufügen eines flüssigen Duftstoffes und eines Lösungsmittels zu dem porösem Siliziumdioxid durch Sprühinjektion, während der Mischapparat gedreht wird,
wobei der flüssige Duftstoff mindestens einen Stoff enthält, der aus einer Gruppe ausgewählt ist, die aus D-Limonen, Isoamylacetat, Ethyl-2-methylbutyrat, Ethyl-Isobutyrat, Eukalyptusöl, Campherkristall, Dipenten Extra, Linalylacetat, Hedion, Citronellol, Isobornylacetat, cis-3-Hexenylacetat, Allylamylglycolat, Lilial, Tricyclodecenylacetat, 2,4-Dimethyl-3-cyclohexen-1-carboxyaldehyd und Nerolin Yara Yara besteht, und wobei das poröse Siliziumdioxid eine BET-Oberflächenausdehnung aufweist, die von 100 bis 200 m²/g reicht.

2. Verfahren nach Anspruch 1, wobei der flüssige Duftstoff in einer Menge von 50 bis 200 Gewichtsteilen bezogen auf 100 Gewichtsteile des porösen Siliziumdioxids vorhanden ist

3. Verfahren nach Anspruch 1, wobei das Lösungsmittel Dipropylenglykol ist, wobei das Lösungsmittel in einer Menge von 10 bis 50 Gewichtsteilen bezogen auf 100 Gewichtsteile des porösen Siliziumdioxid hinzugegeben wird.

4. Kautschukzusammensetzung für einen Reifen, welche 0,1 bis 20 Gewichtsteile der Duftstoffpulverzusammensetzung für einen Reifen, welche nach dem Verfahren gemäß Anspruch 1 hergestellt ist, aufweist, bezogen auf 100 Gewichtsteile eines Rohkautschuks.

5. Kautschuk, welcher die Duftstoffpulverzusammensetzung für einen Reifen aufweist, die nach dem Verfahren gemäß Anspruch 1 hergestellt ist.

6. Reifen, der Kautschuk enthält, welcher die Duftstoffpulverzusammensetzung für einen Reifen aufweist, die nach dem Verfahren gemäß Anspruch 1 hergestellt ist.

## Revendications

1. Procédé de préparation d'une composition de poudre parfumée pour un pneu, comprenant : placer de la silice poreuse dans un mélangeur ; et ajouter un parfum liquide et un solvant à la silice poreuse par injection par pulvérisation tout en faisant tourner le mélangeur,
dans lequel le parfum liquide comprend au moins un composé choisi dans le groupe constitué par le D-limonène, l'acétate d'isoamyle, le butyrate d'éthyl-2-méthyle, l'isobutyrate d'éthyle, l'huile d'eucalyptus, les cristaux de camphre, le dipentène extra, l'acétate de linalyle, l'hédione, le citronellol, l'acétate d'isobornyle, l'acétate de cis-3-hexényle, le glycolate d'allylamyle, le lilial, l'acétate de tricyclodécényle, le 2,4-diméthyl-3-cyclohexène-1-carboxaldéhyde et la néroline yara yara, et la silice poreuse possède une surface spécifique BET comprise dans la plage allant de 100 à 200 m²/g.

2. Procédé selon la revendication 1, dans lequel le parfum liquide est présent en une quantité de 50 à 200 parties en poids, par rapport à 100 parties en poids de la silice poreuse.

3. Procédé selon la revendication 1, dans lequel le solvant est le dipropylène glycol, ledit solvant étant ajouté en une quantité de 10 à 50 parties en poids, par rapport à 100 parties en poids de la silice poreuse.

4. Composition de caoutchouc pour pneu, comprenant de 0,1 à 20 parties en poids de la composition de poudre parfumée pour pneu préparée par le procédé selon la revendication 1, par rapport à 100 parties en poids d'un caoutchouc de départ.

5. Caoutchouc comprenant la composition de poudre parfumée pour pneu préparée par le procédé selon la revendication 1.

6. Pneu contenant le caoutchouc qui comprend la composition de poudre parfumée pour pneu préparée par le procédé selon la revendication 1.
